# EUROPÄISCHE PATENTANMELDUNG

(11) **EP 2 455 711 A2**
(43) Veröffentlichungstag der Anmeldung: **23.05.2012**
(21) Anmeldenummer: 11185633.2
(22) Anmeldetag: 18.10.2011
(51) Int. Cl.: G01C 15/00

(54) **Rotationslasergerät mit einer geneigten Laserebene und Verfahren zur Ausrichtung eines Rotationslasergerätes**

(30) Priorität: 22.11.2010 DE 102010061725
(71) Anmelder: HILTI Aktiengesellschaft, 9494 Schaan (LI)
(72) Erfinder: Lukic, Sasha, 9470 Buchs (CH); Winter, Andreas, 6800 Feldkirch (AT)

(57) **Zusammenfassung**

Rotationslasergerät (1) aufweisend eine Lasereinrichtung (3), die einen Laserstrahl (5) erzeugt, eine Nivelliereinrichtung (14), die den Laserstrahl (5) in einer horizontalen Ebene (X, Y), die senkrecht zum Schwerefeld der Erde angeordnet ist, ausrichtet, eine Neigungseinrichtung (17), die den Laserstrahl (5) um eine Neigungsachse (X) relativ zur horizontalen Ebene (X, Y) neigt, eine Dreheinrichtung (9), die die Lasereinrichtung (3) zumindest teilweise um eine Rotationsachse (4) mit einer Rotationsgeschwindigkeit bewegt, und eine Messeinrichtung (21), mit der ein Drehwinkel der Lasereinrichtung (3) um die Rotationsachse (4) bestimmbar ist, wobei eine Speichereinrichtung (22) zur Speicherung mindestens einer Winkelposition vorgesehen ist.

## Beschreibung

Die vorliegende Erfindung betrifft ein Rotationslasergerät mit einer geneigten Laserebene gemäß dem Oberbegriff des Anspruchs 1. Die Erfindung betrifft auch ein Verfahren zur Ausrichtung eines Rotationslasergerätes gemäß dem Oberbegriff des Anspruchs 9.

Um Nivellier- oder Markierungsarbeiten im Innen- und Außenbereich durchzuführen, sind Rotationslasergeräte bekannt, die begrenzte oder geschlossene linienförmige Lasermarkierungen auf einer Zielfläche erzeugen. Zu den Aufgaben von Rotationslasergeräten gehört die Anzeige von horizontal oder schräg verlaufenden Lasermarkierungen auf einer Zielfläche.

Bekannte Rotationslasergeräte umfassen eine Lasereinrichtung, die einen Laserstrahl erzeugt, eine Dreheinrichtung, die die Lasereinrichtung zumindest teilweise um eine Rotationsachse mit einer Rotationsgeschwindigkeit bewegt, und eine Messeinrichtung, mit der der Drehwinkel der Lasereinrichtung um die Rotationsachse bestimmbar ist. Außerdem weisen bekannte Rotationslasergeräte eine Nivelliereinrichtung auf, die die Laserebene, in der der Laserstrahl um die Rotationsachse rotiert, unabhängig von der Gehäuseausrichtung des Rotationslasergerätes parallel zu einer horizontalen Ebene ausrichtet. Die horizontale Ebene ist senkrecht zum Schwerefeld der Erde ausgerichtet und wird von zwei senkrecht zueinander verlaufenden Achsen, die als X-Achse und Y-Achse bezeichnet werden, aufgespannt. Die Nivelliereinrichtung umfasst eine erste Nivelliereinheit für die X-Achse und eine zweite Nivelliereinheit für die Y-Achse, wobei die erste und zweite Nivelliereinheit jeweils eine Sensoreinrichtung zur Überwachung der Neigung und eine Verstelleinrichtung zum Verstellen der Neigung umfassen.

Um schräge Lasermarkierungen auf einer Zielfläche anzuzeigen, weisen Rotationslasergeräte eine Neigungseinrichtung auf, mit der die Laserebene gegenüber der ausgerichteten horizontalen Ebene gezielt um einen Neigungswinkel geneigt wird. Diese schrägen Lasermarkierungen werden beispielsweise beim Anzeigen einer schiefen Ebene benötigt. Dabei ist wichtig, dass die Laserebene nur in einer Richtung, die als Neigungsrichtung bezeichnet wird, geneigt ist und in der zur Neigungsrichtung senkrechten Richtung, die als Horizontalrichtung bezeichnet wird, weiterhin horizontal ausgerichtet ist. Bekannt sind Neigungseinrichtungen, die die Laserebene um die X-Achse oder um die Y-Achse neigen. Im Folgenden werden Neigungseinrichtungen betrachtet, die die Laserebene um die X-Achse als Neigungsachse neigen, wobei die Ausführungen analog auf Neigungseinrichtungen, die die Laserebene um die Y-Achse neigen, übertragbar sind. Rotationslasergeräte mit einer Neigungseinrichtung, die die Laserebene um die X-Achse und um die Y-Achse neigen, sind für andere Anwendungen vorgesehen.

Die Einstellung der Neigung erfolgt im nivellierten Zustand des Rotationslasergerätes, in dem der Laserstrahl in der horizontalen Ebene angeordnet ist. Die Ausrichtung der Neigungsrichtung und der Horizontalrichtung sind durch die Messaufgabe festgelegt und die Neigungsrichtung wird parallel zu einer auf dem Rotationslasergerät angezeigten X'-Achse ausgerichtet. Im Idealfall, d.h. ohne Maßabweichungen zwischen den Bauteilen des Rotationslasergerätes, sind die als Neigungsachse ausgebildete X-Achse und die auf dem Rotationslasergerät angezeigte X'-Achse parallel zueinander und die Y-Achse ist senkrecht zur angezeigten X'-Achse bzw. senkrecht zur Neigungsrichtung angeordnet. Wenn die Neigungsrichtung bzw. die angezeigte X'-Achse parallel zur Neigungsachse (X-Achse) und senkrecht zur Y-Achse angeordnet sind, führt eine Neigung um die Neigungsachse zu keiner Verstellung der nivellierten horizontalen Position in Y'-Richtung. Maßabweichungen zwischen den verschiedenen Bauteilen des Rotationslasergerätes führen zu einer Verdrehung zwischen der X-Achse und der auf dem Rotationslasergerät angezeigten X'-Achse sowie zwischen der Y-Achse und der Y'-Achse. Wenn die Neigungsrichtung nicht senkrecht zur Y-Achse angeordnet ist, führt die Neigung um die X-Achse zu einer Verstellung der nivellierten horizontalen Position in Y'-Richtung, d.h. es kommt zur einer Abweichung der Horizontalrichtung von der horizontalen Ebene.

Wird das Rotationslasergerät um die Rotationsachse gedreht, gibt es eine Winkelposition, in der die Neigungsrichtung parallel zur X-Achse, die als Neigungsachse ausgebildet ist, und senkrecht zur Y-Achse ausgerichtet ist. Bekannt sind Verfahren zur manuellen Ausrichtung eines Rotationslasergerätes, die ein Bediener vor jeder neuen Messaufgabe des Rotationslasergerätes mit einer geneigten Laserebene ausführen muss. Ziel dieser Verfahren ist es, das Rotationslasergerät so auszurichten, dass die Neigungsrichtung senkrecht zur Y-Achse verläuft. Diese Position wird vom Bediener in iterativen Schritten ermittelt. Der Bediener hat die gesuchte Position gefunden, wenn eine Sensoreinrichtung in Y'-Richtung bei Neigung um die Neigungsachse keine Verstellung aus der nivellierten horizontalen Position detektiert. Nachteilig ist, dass die bekannten Verfahren zur Ausrichtung eines Rotationslasergerätes für den Bediener aufwändig sind, so dass die Ausrichtung nicht immer durchgeführt wird.

Wünschenswert wäre es, ein Rotationslasergerät hinsichtlich der oben erläuterten Nachteile zu verbessern. Die Aufgabe der vorliegenden Erfindung besteht darin, den Aufwand zur Ausrichtung des Rotationslasergerätes für den Bediener zu reduzieren und die Genauigkeit der Lasermarkierungen, die das Rotationslasergerät auf einer Zielfläche erzeugt, zu erhöhen.

Diese Aufgabe wird bei dem eingangs genannten Rotationslasergerät erfindungsgemäß durch die Merkmale des unabhängigen Anspruchs 1 und bei dem eingangs genannten Verfahren zur Ausrichtung eines Rotationslasergerätes durch die Merkmale des unabhängigen Anspruchs 9 gelöst.

Erfindungsgemäß ist bei dem Rotationslasergerät eine Speichereinrichtung zur Speicherung mindestens einer Winkelposition vorgesehen. Durch die Speichereinrichtung besteht die Möglichkeit die Winkelposition, in der die Neigungsrichtung parallel zur X-Achse, die der Neigungsachse entspricht, und senkrecht zur Y-Achse ausgerichtet ist, zu speichern und sie bei Bedarf, d.h. vor einer neuen Messaufgabe, abzurufen. Der Aufwand zur Ausrichtung des Rotationslasergerätes ist verringert, da die Winkelposition nicht aufwändig vom Bediener bestimmt werden muss, sondern das Rotationslasergerät bei Bedarf nur in die Winkelposition gedreht werden muss.

Bevorzugt ist eine Steuereinrichtung vorgesehen, die zumindest eine Strahleigenschaft des Laserstrahls in Abhängigkeit vom Drehwinkel einstellt. Als Strahleigenschaften des Laserstrahls eignet sich vor allem die Laserleistung und bei einem modulierten Laserstrahl die optische Frequenz und/oder die Amplitude. Durch die Änderung zumindest einer Strahleigenschaft des Laserstrahls besteht die Möglichkeit, dem Bediener die Winkelposition optisch anzuzeigen.

In einer bevorzugten Ausführungsform ist die Speichereinrichtung als mechanische Speichereinrichtung ausgebildet und in Form mindestens eines Referenzelementes auf einer Maßscheibe der Messeinrichtung angeordnet. Die Messeinrichtung umfasst eine Maßscheibe, die mit der Dreheinrichtung drehfest verbunden ist, eine Abtasteinrichtung zum Abtasten der Maßscheibe und eine Auswerte- und Steuereinrichtung. Dabei ist die Maßscheibe mit einer drehbaren Welle fest oder über Zahnräder oder -riemen drehfest verbunden. Eine fest verbundene Maßscheibe hat den Vorteil, dass die Messung des Drehwinkels stabil gegenüber äußeren Einflüssen, vor allem der Temperatur, ist. Durch die Zwischenschaltung einer Übersetzung kann die Auflösung des Drehwinkels erhöht werden. Eine mechanische Speichereinrichtung hat den Vorteil, dass für die Speichereinrichtung kein zusätzliches Bauteil erforderlich ist und die Erfassung der Winkelposition stabil gegenüber äußeren Einflüssen ist.

In einer alternativen bevorzugten Ausführungsform ist die Speichereinrichtung als elektronische Speichereinrichtung ausgebildet, wobei die Speichereinrichtung besonders bevorzugt mit einer Eingabeeinrichtung verbunden ist. Eine elektronische Speichereinrichtung hat gegenüber einer mechanischen Speichereinrichtung den Vorteil, dass die Winkelposition, in der die Neigungsrichtung parallel zur X-Achse und senkrecht zur Y-Achse ausgerichtet ist, nachträglich gespeichert werden kann, so dass Rotationslasergeräte nachgerüstet werden können. Außerdem besteht die Möglichkeit, die Winkelposition, falls erforderlich, an sich ändernde Umgebungsbedingungen anzupassen. Bei einer Reparatur oder einem Service des Rotationslasergerätes kann der Hersteller prüfen, ob die Nivellier- und Neigungsachsen in der gespeicherten Winkelposition wie gewünscht ausgerichtet sind. Sollte dies nicht der Fall, kann die geänderte Winkelposition vom Hersteller messtechnisch bestimmt und in der elektronischen Speichereinrichtung als neue Winkelposition gespeichert werden.

Bevorzugt ist eine Anzeigeeinrichtung mit einem ersten Anzeigeelement und einem zweiten Anzeigeelement vorgesehen. Dabei sind das erste Anzeigeelement besonders bevorzugt als Linkspfeil und das zweite Anzeigeelement als Rechtspfeil ausgebildet. Die Anzeigeeinrichtung hat den Vorteil, dass Verstellanweisungen für den Bediener über die Anzeigeelemente angezeigt werden können. Besonders bevorzugt ist ein drittes Anzeigeelement vorgesehen, dass dem Bediener anzeigt, dass das Rotationslasergerät in der gewünschten Winkelposition angeordnet ist.

Bevorzugt ist eine automatische Verstelleinrichtung vorgesehen, mit der das Rotationslasergerät um die Rotationsachse verstellbar ist. Dies hat den Vorteil, dass die Ausrichtung des Rotationslasergerätes vollautomatisch durchgeführt werden kann und der Aufwand für den Bediener minimiert ist.

Bevorzugt ist ein Laserempfänger vorgesehen, wobei der Laserempfänger über eine Kommunikationsverbindung mit dem Rotationslasergerät verbindbar ist und der Laserempfänger ausgebildet ist, zumindest eine Strahleigenschaft des Laserstrahls und/oder ein Zeitintervall des Laserstrahls zu bestimmen. Durch die Kombination des Rotationslasergerätes mit einem Laserempfänger besteht die Möglichkeit, Informationen über den Laserstrahl an das Rotationslasergerät zu übermitteln.

Erfindungsgemäß wird bei dem Verfahren zur Ausrichtung eines Rotationslasergerätes die Winkelposition, in der die Winkelposition, in der die Neigungsachse parallel zu einer vorgegebenen Neigungsrichtung ausgerichtet ist, in einer Speichereinrichtung gespeichert. Dieses Verfahren hat den Vorteil, dass die Winkelposition bereits bekannt ist und das Rotationslasergerät nur noch in die entsprechende Winkelposition gedreht werden muss. Der Aufwand für den Bediener bei der Ausrichtung ist dadurch reduziert, dass er die Winkelposition nicht erst aufwändig bestimmen muss. Die Winkelposition muss nur einmal aufwändig bestimmt werden und kann anschließend jederzeit zur Ausrichtung des Rotationslasergerätes genutzt werden.

Bevorzugt wird der Laserstrahl mit einer Rotationsgeschwindigkeit um die Rotationsachse bewegt, ein Drehwinkel des Laserstrahls um die Rotationsachse von einer Messeinrichtung erfasst und zumindest eine Strahleigenschaft des Laserstrahls in Abhängigkeit vom Drehwinkel eingestellt. Durch die Möglichkeit, den rotierenden Laserstrahl zu steuern, kann die gespeicherte Winkelposition auf einer Zielfläche optisch durch eine sich verändernde Strahleigenschaft des Laserstrahls angezeigt werden.

In einer bevorzugten Variante wird die zumindest eine Strahleigenschaft des Laserstrahls bei Erreichen der Winkelposition von einem ersten Wert zu einem zweiten Wert und bei Erreichen der Nullposition von dem zweiten Wert zu dem ersten Wert verändert. Der Bediener erkennt die Winkelposition als die Position, bei der der Laserstrahl seine Strahleigenschaft ändert. Durch die Möglichkeit, den rotierenden Laserstrahl zu steuern, kann die gespeicherte Winkelposition auf einer Zielfläche optisch durch eine sich verändernde Strahleigenschaft des Laserstrahls angezeigt werden. Dabei eignet sich die optische Frequenz des Laserstrahls ganz besonders. Verschiedene optische Frequenzen können beispielsweise durch Modulation des Laserstrahls mit verschiedenen Modulationsfrequenzen erzeugt werden. Als Strahleigenschaft kann jede Eigenschaft des Laserstrahls verwendet werden, die für den Bediener optisch gut sichtbar ist oder die mit Hilfe eines Laserempfängers erfassbar ist.

In einer weiteren bevorzugten Variante werden aus der mindestens einen gespeicherten Winkelposition ein erster Drehwinkel, der kleiner als die Winkelposition ist, und ein zweiter Drehwinkel, der größer als die Winkelposition ist, berechnet und zumindest eine Strahleigenschaft des Laserstrahls wird in Abhängigkeit vom Drehwinkel gesteuert, wobei die zumindest eine Strahleigenschaft des Laserstrahls bei Erreichen des ersten Drehwinkels von einem ersten Wert zu einem zweiten Wert, bei Erreichen des zweiten Drehwinkels von dem zweiten Wert zu einem dritten Wert und bei Erreichen der Nullposition von dem dritten Wert zu dem ersten Wert verändert wird. Dieses Verfahren hat den Vorteil, dass der Bediener optisch erkennen kann, ob das Rotationslasergerät ausgerichtet ist, und falls dies nicht der Fall ist, ob eine Rechtsdrehung oder eine Linksdrehung des Rotationslasergerätes um die Rotationsachse erforderlich ist.

In einem alternativen bevorzugten Verfahren wird die Lasereinrichtung zwischen einem ersten und zweiten Wendepunkt von der Dreheinrichtung um die Rotationsachse hin- und herbewegt. In diesem Scanmodus ist das Rotationslasergerät in der gewünschten Winkelposition ausgerichtet, wenn der Mittelpunkt der begrenzten Laserlinie mit der Neigungsrichtung des Rotationslasergerätes zusammenfällt.

Bevorzugt wird der Laserstrahl von einem Laserempfänger erfasst und die zumindest eine Strahleigenschaft des Laserstrahls und/oder ein Zeitintervall wird von dem Laserempfänger bestimmt. Bevorzugt wird aus der zumindest einen Strahleigenschaft des Laserstrahls eine Verstellanweisung für den Bediener bestimmt, wobei die Verstellanweisung auf einer Anzeigeeinrichtung angezeigt wird. Dadurch, dass der Laserempfänger die zumindest eine Strahleigenschaft des Laserstrahls, die verändert wurde, erfasst, wird der Aufwand für den Bediener weiter reduziert. Der Bediener erhält eine einfache Verstellanweisung.

In einem alternativen bevorzugten Verfahren wird die mindestens eine gespeicherte Winkelposition an eine automatische Verstelleinrichtung übermittelt und das Rotationslasergerät wird von der Verstelleinrichtung um die Rotationsachse in die gespeicherte Winkelposition gedreht. Diese Verfahrensvariante hat den Vorteil, dass die Ausrichtung des Rotationslasergerätes vollautomatisch durchgeführt wird und der Aufwand zur Ausrichtung des Rotationslasergerätes für den Bediener minimal ist.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- Fig. 1: ein erfindungsgemäßes Rotationslasergerät mit einer Messeinrichtung zur Erfassung eines Drehwinkels und einer Speichereinrichtung zur Speicherung einer Winkelposition;
- Fig. 2: die Messeinrichtung der Fig. 1 und eine erste Ausführung der Speichereinrichtung, die als mechanische Speichereinrichtung auf einer Maßscheibe der Messeinrichtung angeordnet ist;
- Fig. 3: die Messeinrichtung der Fig. 1 und eine zweite Ausführung der Speichereinrichtung, die als elektronische Speichereinrichtung ausgebildet ist;
- Fign. 4A, B: eine Anordnung bestehend aus dem Rotationslasergerät der Fig. 1 und einem Laserempfänger zur manuellen Ausrichtung des Rotationslasergerätes (Fig. 4A) und das Zusammenwirken des Rotationslasergerätes und des Laserempfängers in Form eines Blockdiagramms (Fig. 4B);
- Fign. 5A,: B ein erfindungsgemässes Verfahren zur manuellen Ausrichtung eines Rotationslasergerätes mit Hilfe des Rotationslasergerätes und des Laserempfängers der Fign. 4A, B;
- Fig. 6: ein alternative Anordnung und ein alternatives Verfahren zur manuellen Ausrichtung eines Rotationslasergerätes; und
- Fig. 7: eine Anordnung zur automatischen Ausrichtung eines Rotationslasergerätes mit einer automatischen Verstelleinrichtung.

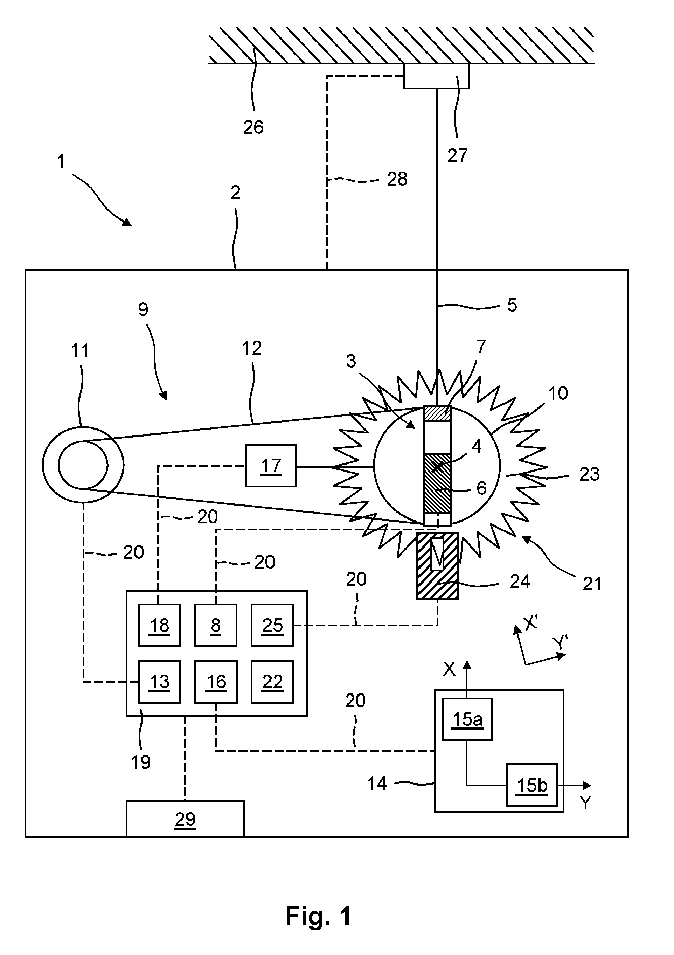

**Fig. 1** zeigt in einer schematischen Darstellung ein erfindungsgemäßes Lasergerät **1**, das als Rotationslasergerät ausgebildet ist. Das Rotationslasergerät 1 umfasst ein Gehäuse **2** und eine in dem Gehäuse 2 angeordnete Lasereinrichtung **3**, die um eine Rotationsachse **4** drehbar ausgebildet ist.

Die Lasereinrichtung 3 erzeugt einen Laserstrahl **5** und umfasst eine Strahlquelle **6** und ein optisches Element **7** zur Strahlformung des Laserstrahls, das als Strahlformungsoptik bezeichnet wird. Die Strahlquelle 6 ist als Halbleiterlaser ausgebildet, der einen Laserstrahl 5 im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des Laserstrahls 5 aus der Strahlquelle 6 wird der Laserstrahl 5 mit Hilfe der Strahlformungsoptik 7 kollimiert und ein paralleler Laserstrahl erzeugt. Die Steuerung der Strahlquelle 6 erfolgt über eine erste Steuereinrichtung **8**.

Die Lasereinrichtung 3 ist mit einer Dreheinrichtung **9** verbunden, die die Lasereinrichtung 3 mit einer Rotationsgeschwindigkeit um die Rotationsachse 4 bewegt, wobei die Rotationsgeschwindigkeit konstant aber auch variabel sein kann. Die Dreheinrichtung 9 umfasst eine drehbare Welle **10**, eine Motoreinheit **11** und eine Übertragungseinrichtung **12**, die in Form eines Zahnriemens ausgebildet ist und die Bewegung der Motoreinheit 11 auf die Welle 10 überträgt. Die Lasereinrichtung 3 ist mit der drehbaren Welle 10 gekoppelt und um die Rotationsachse 4 drehbar. Die Steuerung der Dreheinrichtung 9 erfolgt über eine zweite Steuereinrichtung **13**.

In der Ausführung der Fig. 1 werden die Strahlquelle 6 und die Strahlformungsoptik 7 von der Dreheinrichtung 9 um die Rotationsachse 4 bewegt. In einer alternativen Ausführung umfasst die Lasereinrichtung 3 zusätzlich ein optisches Element zur Umlenkung des Laserstrahls, das als Umlenkoptik bezeichnet wird. Die Strahlquelle 6 erzeugt einen Laserstrahl, der auf die Umlenkoptik gerichtet ist. Die Umlenkoptik ist mit der Welle 10 gekoppelt und wird von der Dreheinrichtung 9 um die Rotationsachse 4 bewegt. Die Strahlformungsoptik 7 kann zwischen der Strahlquelle 6 und der Umlenkoptik angeordnet sein. Außerdem kann die Strahlformungsoptik 7 in die Strahlquelle 6 integriert sein oder bei einer Strahlquelle 6 mit einer hohen Strahlqualität und geringen Divergenz eventuell ganz entfallen. In jedem Fall wird mindestens eine Komponente der Lasereinrichtung 3 von der Dreheinrichtung 9 um die Rotationsachse 4 bewegt.

Das Rotationslasergerät 1 weist eine Nivelliereinrichtung **14** auf, mit der der Laserstrahl 5 unabhängig von einer Ausrichtung des Gehäuses 2 in einer horizontalen Ebene, die senkrecht zum Schwerefeld der Erde ausgerichtet ist, verläuft. Die horizontale Ebene wird von zwei senkrecht zueinander verlaufenden Nivellierachsen, die als X- und **Y**-Achse bezeichnet werden, aufgespannt. Die Nivelliereinrichtung **14** umfasst für die X-Achse eine erste Nivelliereinheit **15a** und für die Y-Achse eine zweite Nivelliereinheit **15b**. Die Nivelliereinheiten 15a, 15b umfassen jeweils eine Sensoreinrichtung und eine Verstelleinrichtung. Die Steuerung der Nivelliereinrichtung 14 erfolgt über eine dritte Steuereinrichtung **16**.

Die Laserebene, in der der Laserstrahl verläuft, kann um einen Neigungswinkel gegenüber der horizontalen Ebene geneigt sein. Dazu ist die Welle 10 mittels einer Neigungseinrichtung **17** zur Verstellung des Neigungswinkels um die X-Achse, die auch als Neigungsachse bezeichnet wird, verstellbar ausgebildet. Eine geneigte Laserebene ist in Richtung der X-Achse (X-Richtung) geneigt und in Richtung der Y-Achse (Y-Richtung) horizontal ausgerichtet. Die Steuerung der Neigungseinrichtung 17 erfolgt über eine vierte Steuereinrichtung **18**.

Die Nivellierachsen X, Y werden auf dem Rotationslasergerät 1 über Anzeigeelemente **X', Y'** angezeigt. Im Idealfall, d.h. ohne Maßabweichungen zwischen den Bauteilen des Rotationslasergerätes 1, verlaufen die X-Achse bzw. die Y-Achse und die auf dem Rotationslasergerät 1 angezeigte X'-Achse bzw. die Y'-Achse parallel zueinander. Maßabweichungen der verschiedenen Bauteile des Rotationslasergerätes 1 führen zu einer Verdrehung zwischen der X-Achse und der X'-Achse sowie zwischen der Y-Achse und der Y'-Achse. Die Messaufgabe bestimmt die Ausrichtung der Neigungsrichtung und der Horizontalrichtung. Das Rotationslasergerät 1 wird so angeordnet, dass die Neigungsrichtung parallel zur X'-Achse und die Horizontalrichtung parallel zur Y'-Achse verlaufen.

Die erste Steuereinrichtung 8 zur Steuerung der Lasereinrichtung 3, die zweite Steuereinrichtung 13 zur Steuerung der Dreheinrichtung 9, die dritte Steuereinrichtung 16 zur Steuerung der Nivelliereinrichtung 14 und die vierte Steuereinrichtung 18 zur Steuerung der Neigungseinrichtung 17 können als getrennte Komponenten ausgebildet sein oder in eine gemeinsame Kontrolleinrichtung **19**, die beispielsweise als Mikrocontroller ausgebildet ist, integriert sein. Die Steuereinrichtungen 8, 13, 16, 18 sind über Kommunikationsverbindungen 20 mit den zu steuernden Komponenten 6, 9, 14, 17 verbunden.

Das Rotationslasergerät 1 umfasst eine Messeinrichtung **21**, die den Drehwinkel der Lasereinrichtung 3 bzw. des Laserstrahls 5 während der Rotation um die Rotationsachse 4 erfasst, und eine Speichereinrichtung **22** zur Speicherung eines oder mehrerer Drehwinkel. Die Messeinrichtung 21 besteht aus einer Maßscheibe **23**, die mit der Welle 10 drehfest verbunden ist, einer Abtasteinrichtung **24** zum Abtasten der Maßscheibe 23 und einer Auswerte- und Steuereinrichtung **25**. Die Auswerte- und Steuereinrichtung 25 ist in der in Fig. 1 gezeigten Ausführung in die Kontrolleinrichtung 19 integriert, sie kann alternativ als separate Elektronikkomponente ausgebildet sein. Die Speichereinrichtung 22 ist beispielsweise als elektronische Speichereinrichtung oder als mechanische Speichereinrichtung in Form von Referenzelementen auf der Maßscheibe 23 angeordnet.

Der Laserstrahl 5, der aus dem Rotationslasergerät 1 austritt, erzeugt auf einer Zielfläche **26** eine Lasermarkierung. Um die Lasermarkierung sichtbar zu machen, wird ein Laserempfänger **27** verwendet, der auf der Zielfläche 26 positioniert ist. Der Laserempfänger 27 ist über eine Kommunikationsverbindung **28** mit dem Rotationslasergerät 1 verbindbar.

Das Rotationslasergerät 1 weist eine Bedienungseinrichtung **29** auf, die in das Gehäuse 2 integriert und von außen bedienbar ist. Neben der in das Gehäuse 2 integrierten Bedienungseinrichtung 29 kann eine weitere Bedienungseinrichtung in Form einer Fernbedienungseinrichtung vorgesehen sein, die über eine Kommunikationsverbindung mit dem Rotationslasergerät 1 verbindbar ist. Die Fernbedienungseinrichtung ist beispielsweise in den Laserempfänger 27 integriert.

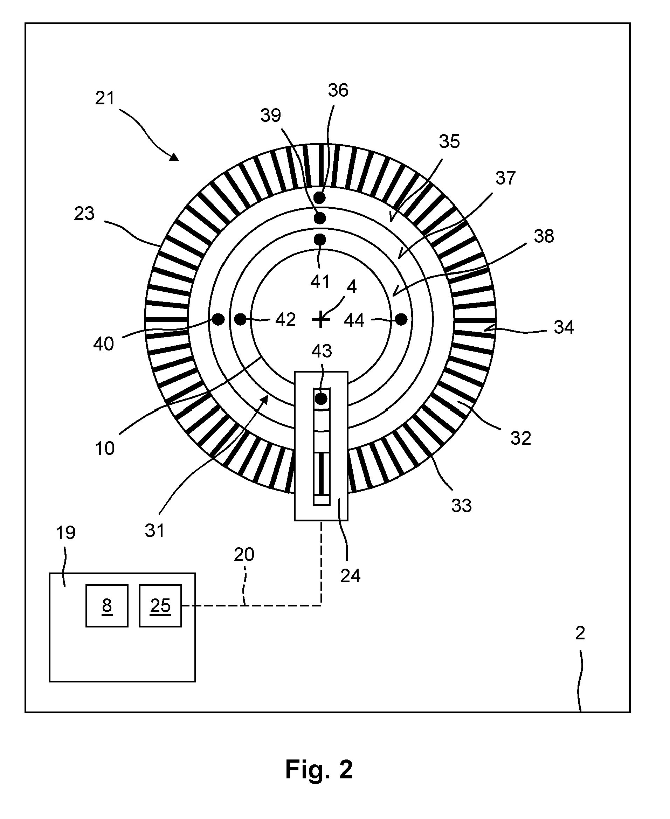

**Fig. 2** zeigt die Messeinrichtung 21 zur Erfassung der Drehwinkel der Lasereinrichtung 3 bzw. des Laserstrahls 5 und eine erste Ausführungsform einer Speichereinrichtung zur Speicherung einer oder mehrerer Winkelpositionen, die als mechanische Speichereinrichtung **31** auf der Maßscheibe 23 der Messeinrichtung 21 ausgebildet ist.

Die Messeinrichtung 21 ist als inkrementaler Drehgeber ausgebildet und basiert auf einem photoelektrischen Messprinzip. Die Maßscheibe 23 der Messeinrichtung 21 weist eine Mehrzahl an Segmenten auf, die abwechselnd als helle Streifen **32** und dunkle Streifen **33** ausgebildet sind. Die Segmente 32, 33 werden auch als Inkremente bezeichnet und bilden auf der Maßscheibe 23 eine sogenannte Inkrementalspur **34**, die die Maßverkörperung des Drehgebers darstellt. Bei einer vollständigen Umdrehung der Maßscheibe 23 werden so viele elektrische Signale ausgegeben, wie Inkremente auf der Maßscheibe 23 vorhanden sind. Die Anzahl der Inkremente 32, 33 bestimmt die Auflösung der Messeinrichtung 21 und jedes Inkrement 32, 33 entspricht einer Winkeleinheit der Maßscheibe 23. Die Auflösung der Maßscheibe 23 kann nachträglich nicht verändert werden.

Die Maßscheibe 23 weist neben der Inkrementalspur 34 eine zweite Spur **35** auf, in der ein Referenzelement **36**, das die Nullposition festlegt und im Folgenden als Nullelement 36 bezeichnet wird, angeordnet ist. Die zweite Spur wird auch als Referenzspur 35 bezeichnet. Die Speichereinrichtung 31 ist in die Maßscheibe 23 integriert und in Form von Referenzelementen auf der Maßscheibe 23 ausgebildet. Die Maßscheibe 23 weist neben der Inkrementalspur 34 und der Referenzspur 35 eine dritte Spur **37** und eine vierte Spur **38** auf, die gemeinsam die mechanische Speichereinrichtung 31 bilden.

Die dritte Spur 37 umfasst ein erstes Referenzelement **39**, das einer ersten Winkelposition ar von 0° entspricht, und ein zweites Referenzelement **40**, das einer zweiten Winkelposition α₂ von 90° entspricht. Das erste und zweite Referenzelement 39, 40 werden genutzt, um in einem Linienmodus des Rotationslasergerätes 1 eine begrenzte Laserlinie mit einem Öffnungswinkel von 90° auf der Zielfläche 26 zu erzeugen.

Die vierte Spur 38 umfasst ein weiteres Referenzelement **41**, das einer weiteren Winkelposition Γ entspricht. Um die Genauigkeit von schrägen Lasermarkierungen, die das Rotationslasergerät 1 auf der Zielfläche 26 erzeugt, zu erhöhen, ist die Winkelposition, bei der die Neigungsrichtung parallel zur Neigungsachse (X-Achse) und senkrecht zur Y-Achse angeordnet ist, in der Speichereinrichtung 31 als Referenzelement 41 gespeichert. Nach dem Aufbau des Rotationslasergerätes 1 bestimmt der Gerätehersteller diese Winkelposition Γ und speichert sie in der Speichereinrichtung 31. Der Bediener nutzt die in die Messeinrichtung 21 integrierte Speichereinrichtung 31 und den Laserempfänger 27 dazu, das Rotationslasergerät 1 in einem Ausrichtungsmodus so auszurichten, dass die Neigungsrichtung parallel zur Neigungsachse und senkrecht zur Y-Achse angeordnet ist.

Neben den in Fig. 2 gezeigten Winkelpositionen kann jede beliebige Winkelposition als Referenzelement auf der Maßscheibe 23 angeordnet und in der mechanischen Speichereinrichtung 31 gespeichert werden. Allerdings müssen die Winkelpositionen, die als Referenzelemente auf der Maßscheibe 23 gespeichert werden sollen, bereits bei der Herstellung der Messeinrichtung 21 festgelegt werden. Eine nachträgliche Änderung und Speicherung weiterer Winkelpositionen ist nicht möglich. Die Speichereinrichtung 31 eignet sich daher vor allem für Winkelpositionen, die in der Anwendung häufig benötigt werden. Dazu gehören beispielsweise die Winkelpositionen 90° und 180°.

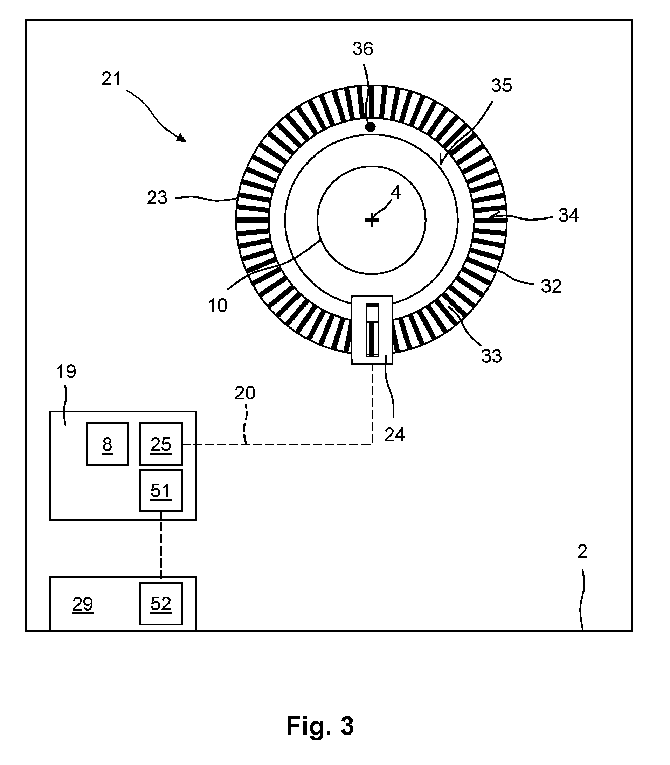

**Fig. 3** zeigt die Messeinrichtung 21 zur Erfassung des Drehwinkels und eine zweite Ausführungsform einer Speichereinrichtung **51**, die als elektronische Speichereinrichtung ausgebildet ist. Um beliebige Winkel von einer Zielfläche 26 auf eine andere Zielfläche 26 zu übertragen oder Laserlinien mit einem beliebigen Öffnungswinkel zu erzeugen, eignet sich die elektronische Speichereinrichtung 51 besonders.

Die Speichereinrichtung 51 ist mit der Auswerte- und Steuereinrichtung 25 der Messeinrichtung 21 verbunden, sie kann alternativ als gemeinsame Elektronikkomponente mit der Auswerte- und Steuereinrichtung 25 ausgebildet sein. Die in der Speichereinrichtung 51 gespeicherten Winkelpositionen, die beispielsweise zur Steuerung der Strahleigenschaften des Laserstrahls 5 genutzt werden, sind dauerhaft als feste Werte in der Speichereinrichtung 51 gespeichert oder werden vom Bediener über eine Eingabeeinrichtung **52** eingegeben und sind nur vorübergehend in der Speichereinrichtung 51 gespeichert. Die Eingabeeinrichtung 52 ist beispielsweise in die Bedienungseinrichtung 29 des Rotationslasergerätes 1 oder in den Laserempfänger 27 integriert.

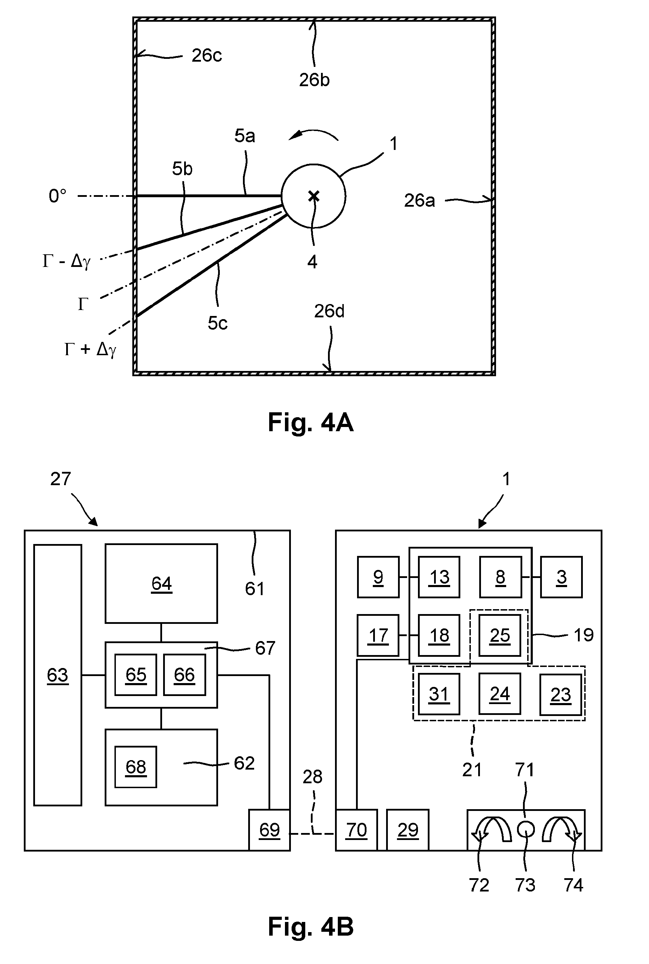

**Fig. 4A** zeigt eine Anordnung bestehend aus dem Rotationslasergerät 1 und dem Laserempfänger 27 zur Ausrichtung des Rotationslasergerätes 1 mit Hilfe der Messeinrichtung 21 und der Speichereinrichtung 31. Die Winkelposition Γ ist als Referenzelement 41 in der Speichereinrichtung 31 gespeichert. Der Bediener wird bei der Ausrichtung des Rotationslasergerätes 1 von dem Rotationslasergerät 1 und dem Laserempfänger 27 unterstützt. Die Winkelposition Γ wird dem Bediener durch verschiedene Laserstrahlen 5a, 5b, 5c optisch angezeigt.

Die Drehwinkel von 0° bis 360° sind in drei Winkelbereiche unterteilt, einen ersten Winkelbereich zwischen 0° und Γ - Δγ, einen zweiten Winkelbereich zwischen Γ - Δγ und Γ + Δγ und einen dritten Winkelbereich zwischen Γ + Δγ und 360°. Der Wert Δγ entspricht zum einen der Genauigkeit, mit der die Laserleistung der Strahlquelle 6 geschaltet werden kann, und ist zum anderen so festgelegt, dass die Lasermarkierung zwischen Γ - Δγ und Γ + Δγ für den Bediener gut sichtbar ist.

**Fig. 4B** zeigt die wesentlichen Komponenten des Laserempfängers 27 und das Zusammenwirken des Laserempfängers 27 mit dem Rotationslasergerät 1 in Form eines Blockdiagramms.

Der Laserempfänger 27 umfasst ein Gehäuse **61**, in das eine Bedienungseinrichtung **62**, eine Detektoreinrichtung **63** zur Detektion des Laserstrahls 5 und eine Anzeigeeinrichtung **64** integriert sind. Die Detektoreinrichtung 63 und die Anzeigeeinrichtung 64 sind mit einer Auswerteeinrichtung **65** verbunden. Die Auswerteeinrichtung 65 ist mit einer Steuereinrichtung **66** zur Steuerung des Laserempfängers 27 verbunden, wobei die Auswerte- und Steuereinrichtungen 65, 66 in eine beispielsweise als Mikrocontroller ausgebildete Kontrolleinrichtung **67** integriert sind. Der Laserempfänger 27 ist über einen Modusschalter **68** zwischen verschiedenen Betriebsmodi schaltbar. In einem ersten Betriebsmodus dient der Laserempfänger 27 zur Ausrichtung des Rotationslasergerätes 1, in einem zweiten Betriebsmodus zur optischen und/oder akustischen Anzeige des Laserstrahls 5 und in einem dritten Betriebsmodus zur Fernbedienung des Rotationslasergerätes 1.

Die Kommunikation zwischen dem Laserempfänger 27 und dem Rotationslasergerät 1 erfolgt über die Kommunikationsverbindung 28, die eine erste Sende-/Empfangseinheit 69 im Laserempfänger 27 mit einer zweiten Sende-/Empfangseinheit **70** im Rotationslasergerät 1 verbindet.

Das Rotationslasergerät 1 weist neben den in Fig. 1 beschriebenen Komponenten eine Anzeigeeinrichtung **71** auf, über die dem Bediener Verstellanweisungen angezeigt werden. Die Anzeigeeinrichtung 71 umfasst ein erstes Anzeigeelement **72**, das in Form eines Linkspfeils ausgebildet ist, ein zweites Anzeigeelement **73**, das in Form eines Kreises ausgebildet ist, und ein drittes Anzeigeelement **74**, das in Form eines Rechtspfeils ausgebildet ist.

Ein leuchtender Linkspfeil 72 signalisiert dem Bediener, dass das Rotationslasergerät 1 in die linke Richtung gedreht werden muss. Wenn der Korrekturwinkel Γ ± Δγ erreicht ist, leuchtet der Kreis 73 und signalisiert dem Bediener, dass die Ausrichtung des Rotationslasergerätes 1 erfolgreich beendet ist. Ein leuchtender Rechtspfeil 74 signalisiert dem Bediener, dass das Rotationslasergerät 1 in die rechte Richtung gedreht werden muss.

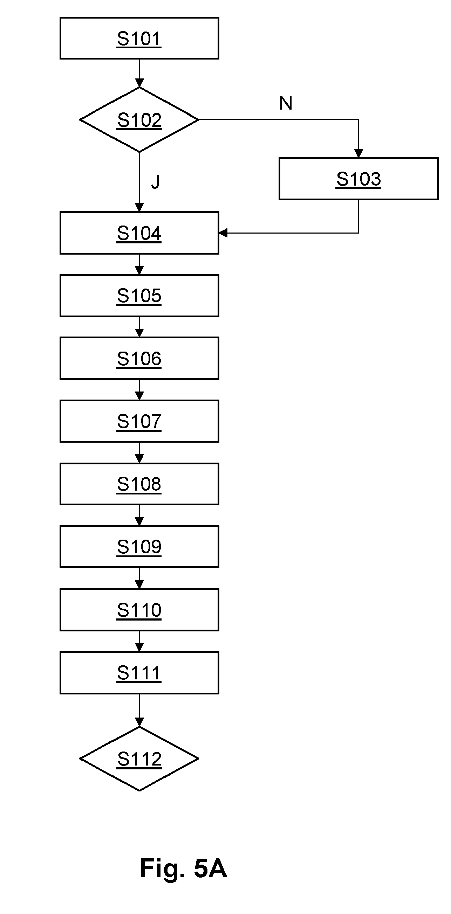

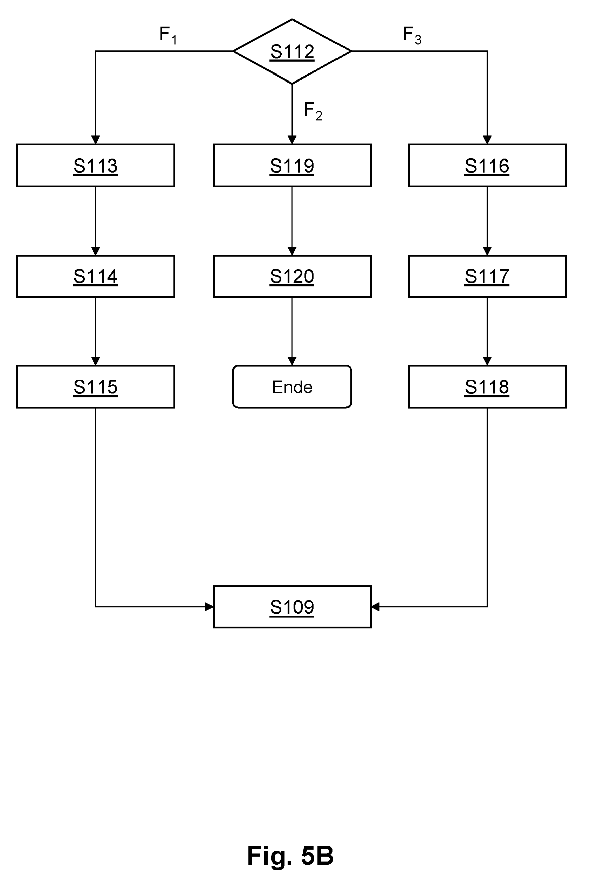

**Fign. 5A**, B zeigen ein erfindungsgemäßes Verfahren zur manuellen Ausrichtung des Rotationslasergerätes 1 durch den Bediener mit Hilfe der Messeinrichtung 21 sowie des Laserempfängers 27 anhand eines Flussdiagramms.

In einem Schritt **S101** positioniert der Bediener den Laserempfänger 27 in Richtung der Neigungsachse und aktiviert den Ausrichtungsmodus über die Bedienungseinrichtung 62 des Laserempfängers 27. In einem Schritt **S102** wird geprüft, ob die Kommunikationsverbindung 28 zwischen dem Laserempfänger 27 und dem Rotationslasergerät 1 aktiviert ist. Ist die Kommunikationsverbindung 28 nicht aktiviert (N in S102), wird die Kommunikationsverbindung 28 in einem Schritt **S103** aktiviert. Ist die Kommunikationsverbindung 28 zwischen dem Laserempfänger 27 und dem Rotationslasergerät 1 bereits aktiviert (J in S102), wird das Verfahren mit Schritt **S104** fortgesetzt.

In Schritt S34 gibt der Bediener den Neigungswinkel der Laserebene über die Bedienungseinrichtung 29 des Rotationslasergerätes 1 oder über die Bedienungseinrichtung 62 des Laserempfängers 27 ein. Der Neigungswinkel wird in einem Schritt **S105** vom Laserempfänger 27 über die Kommunikationsverbindung 28 an die Steuereinrichtung 18 der Neigungseinrichtung 17 übermittelt. Die Steuereinrichtung 18 erteilt in einem Schritt **S106** einen entsprechenden Steuerbefehl an die Neigungseinrichtung 17, die die Welle 10 in einem Schritt **S107** um den gewünschten Neigungswinkel neigt. In einem Schritt **S108** übermittelt die Steuereinrichtung 18 eine Information an den Laserempfänger 27, dass die Neigung eingestellt ist.

In einem Schritt **S109** übermittelt die Steuereinrichtung 66 des Laserempfängers 27 einen Steuerbefehl an die Strahlquelle 6 und die Dreheinrichtung 9 eine durchgehende Lasermarkierung auf der Zielfläche 26 zu erzeugen. Der Laserstrahl, den die Strahlquelle 6 aussendet, wird in einem Schritt **S110** von der Steuereinrichtung 8 in Abhängigkeit von der gespeicherten Winkelposition Γ und dem momentanen Drehwinkel der Dreheinrichtung 9, mit drei verschiedenen Modulationsfrequenzen moduliert, so dass die drei Laserstrahlen 5a, 5b, 5c mit unterschiedlichen optischen Frequenzen resultieren. Für Drehwinkel zwischen 0° und Γ - Δγ wird der Laserstrahl 5 mit einer ersten Modulationsfrequenz **F₁**, im Bereich zwischen Γ - Δγ und Γ + Δγ mit einer zweiten Modulationsfrequenz F₂ und im Intervall Γ + Δγ bis 360° mit einer dritten Modulationsfrequenz **F₃** moduliert.

In einem Schritt **S111** erfasst die Detektoreinrichtung 63 des Laserempfängers 27 den Laserstrahl, bestimmt die optische Frequenz des auf die Detektoreinrichtung 63 aufgetroffenen Laserstrahls und übermittelt die optische Frequenz an die Steuereinrichtung 66. Die Steuereinrichtung 66 ermittelt in einem Schritt **S112** die optische Frequenz des aufgetroffenen Laserstrahls und vergleicht diese mit einer Modulationsfrequenz, mit der der Laserstrahl moduliert wurde.

Fig. 5B zeigt das weitere Verfahren nach Schritt S112 für die verschiedenen Modulationsfrequenzen F₁, F₂ und F₃, mit denen der Laserstrahl in Abhängigkeit vom Drehwinkel moduliert wurde.

Wurde der Laserstrahl mit der ersten Modulationsfrequenz F₁ moduliert, erteilt die Steuereinrichtung in einem Schritt **S113** einen Steuerbefehl an die Anzeigeeinrichtung 71, den Rechtspfeil 74 zu aktivieren. In einem Schritt **S114** wird der Rechtspfeil 74 aktiviert. Der Bediener dreht das Rotationslasergerät 1 in einem Schritt **S115** entsprechend der optischen Anweisung im Uhrzeigersinn. Das Verfahren wird mit Schritt S109 fortgesetzt.

Wurde der Laserstrahl mit der dritten Modulationsfrequenz F₃ moduliert, erteilt die Steuereinrichtung in einem Schritt **S116** einen Steuerbefehl an die Anzeigeeinrichtung 71, den Linkspfeil 72 zu aktivieren. In einem Schritt **S117** wird der Linkspfeil 72 aktiviert. Der Bediener dreht das Rotationslasergerät 1 in einem Schritt **S118** entsprechend der optischen Anweisung entgegen dem Uhrzeigersinn. Das Verfahren wird mit Schritt S109 fortgesetzt.

Wurde der Laserstrahl mit der zweiten Modulationsfrequenz F₂ moduliert, erteilt die Steuereinrichtung in einem Schritt **S119** einen Steuerbefehl an die Anzeigeeinrichtung 71, den Kreis 73 zu aktivieren. In einem Schritt **S120** wird der Kreis 73 aktiviert. Das Verfahren zur Ausrichtung des Rotationslasergerätes 1 ist nach Schritt S120 beendet.

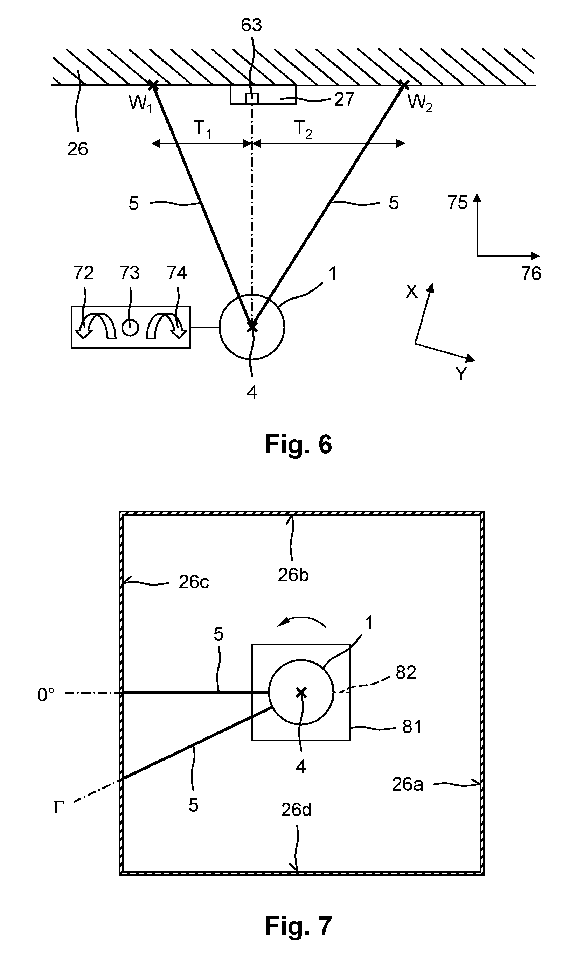

**Fig. 6** zeigt ein alternatives Verfahren zur manuellen Ausrichtung des Rotationslasergerätes 1 mit Hilfe der Messeinrichtung 21 und des Laserempfängers 27. Das Rotationslasergerät 1 wird in einem Scanmodus betrieben. Im Scanmodus wird der Laserstrahl 5 in einem begrenzten Winkelbereich zwischen einem ersten Wendepunkt **W₁** und einem zweiten Wendepunkt **W₂** hin- und herbewegt. Der Laserstrahl 5 erzeugt auf der Zielfläche 26 eine begrenzte Laserlinie.

Ziel ist es, das Rotationslasergerät 1 so auszurichten, dass die Winkelposition Γ, in der die durch die Messaufgabe vorgegebene Neigungsrichtung **75** parallel zur Neigungsachse X und senkrecht zur Y-Achse ausgerichtet ist, im Mittelpunkt der Detektoreinrichtung 63 angeordnet ist. Der Laserempfänger 27 wird so auf der Zielfläche 26 positioniert, dass die Gerade durch den Mittelpunkt der Detektoreinrichtung 63 und durch die Rotationsachse 4 parallel zur Neigungsrichtung 75 verläuft. Die Horizontalrichtung **76** ist senkrecht zur Neigungsrichtung 75 angeordnet.

Das Rotationslasergerät 1 erzeugt auf einen Steuerbefehl des Laserempfängers 27 eine begrenzte Laserlinie zwischen den Wendepunkten W₁, W₂. Der Laserempfänger 27 bestimmt eine Zeit T₁, die der Laserstrahl 5 für die Strecke von der Detektoreinrichtung 63 zum ersten Wendepunkt W₁ und zurück zur Detektoreinrichtung 63 benötigt, und eine Zeit T₂, die der Laserstrahl 5 für die Strecke von der Detektoreinrichtung 63 zum zweiten Wendepunkt W₂ und zurück zur Detektoreinrichtung 63 benötigt.

Das Rotationslasergerät 1 ist in der Winkelposition Γ angeordnet, wenn die Zeiten T₁ und T₂ gleich sind. Dies wird dem Bediener über den leuchtenden Kreis 73 angezeigt. Ist die Zeit T₁, wie in Fig. 6 gezeigt, kleiner als die Zeit T₂, leuchtet der Linkspfeil 72, der dem Bediener anzeigt, dass das Rotationslasergerät 1 gegen den Uhrzeigersinn, d.h. in die linke Richtung, um die Rotationsachse 4 gedreht werden muss. Ist die Zeit T₁ größer als die Zeit T₂, muss das Rotationslasergerät 1 im Uhrzeigersinn, d.h. in die rechte Richtung, um die Rotationsachse 4 gedreht werden. Diese Verstellanweisung wird dem Bediener über den leuchtenden Rechtspfeil 74 angezeigt.

**Fig. 7** zeigt eine alternative Variante zur Ausrichtung des Rotationslasergerätes 1 mittels einer automatischen Verstelleinrichtung **81**. Diese Verfahrenvariante hat gegenüber dem in Fign. 5A, B gezeigten manuellen Verfahren den Vorteil, dass der Aufwand für den Bediener minimal ist. Der Bediener muss nur abwarten, bis das Verfahren zur Ausrichtung des Rotationslasergerätes 1 abgeschlossen ist.

Fig. 7 zeigt eine Variante, in der das Rotationslasergerät auf der Verstelleinrichtung 81 angeordnet ist und um die Rotationsachse 4 gedreht wird. Alternativ kann die Verstelleinrichtung 81 im Gehäuse 2 des Rotationslasergerätes 1 vorgesehen sein. In diesem Fall werden die Welle 10 und die mit der Welle 10 drehfest verbundenen Komponenten relativ zum Gehäuse 2 um die Rotationsachse 4 gedreht.

Das Rotationslasergerät 1 ist über eine Kommunikationsverbindung **82** mit der Verstelleinrichtung 81 verbunden. Im Ausrichtungsmodus wird die in der Speichereinrichtung gespeicherte Winkelposition Γ über die Kommunikationsverbindung 82 an die Verstelleinrichtung 81 übermittelt. Die Verstelleinrichtung 81 dreht das Rotationslasergerät 1 in die Winkelposition Γ, in der die Neigungsrichtung parallel zur Neigungsachse (X-Achse) und senkrecht zur Y-Achse ausgerichtet ist.

## Patentansprüche

1. Rotationslasergerät (1) aufweisend
eine Lasereinrichtung (3), die einen Laserstrahl (5) erzeugt,
eine Nivelliereinrichtung (14), die den Laserstrahl (5) in einer horizontalen Ebene (X, Y), die senkrecht zum Schwerefeld der Erde angeordnet ist, ausrichtet,
eine Neigungseinrichtung (17), die den Laserstrahl (5) um eine Neigungsachse (X) relativ zur horizontalen Ebene (X, Y) neigt,
eine Dreheinrichtung (9), die die Lasereinrichtung (3) zumindest teilweise um eine Rotationsachse (4) mit einer Rotationsgeschwindigkeit bewegt, und
eine Messeinrichtung (21), mit der ein Drehwinkel der Lasereinrichtung (3) um die Rotationsachse (4) bestimmbar ist,
**dadurch gekennzeichnet, dass** eine Speichereinrichtung (22; 31; 51) zur Speicherung mindestens einer Winkelposition (α₁, α₂; Γ) vorgesehen ist.

2. Rotationslasergerät nach Anspruch 1, **dadurch gekennzeichnet, dass** eine Steuereinrichtung (8), die zumindest eine Strahleigenschaft des Laserstrahls (5) in Abhängigkeit vom Drehwinkel einstellt, vorgesehen ist.

3. Rotationslasergerät nach einem der Ansprüche 1 bis 2, **dadurch gekennzeichnet, dass** die Speichereinrichtung als mechanische Speichereinrichtung (31) ausgebildet und in Form mindestens eines Referenzelementes (39, 40, 41) auf einer Maßscheibe (23) der Messeinrichtung (21) angeordnet ist.

4. Rotationslasergerät nach einem der Ansprüche 1 bis 2, **dadurch gekennzeichnet, dass** die Speichereinrichtung als elektronische Speichereinrichtung (51) ausgebildet ist.

5. Rotationslasergerät nach Anspruch 4, **dadurch gekennzeichnet, dass** die Speichereinrichtung (51) mit einer Eingabeeinrichtung (52) verbunden ist.

6. Rotationslasergerät nach einem der Ansprüche 1 bis 5, **dadurch gekennzeichnet, dass** eine automatische Verstelleinrichtung (81), mit der das Rotationslasergerät (1) um die Rotationsachse (4) verstellbar ist, vorgesehen ist.

7. Rotationslasergerät nach einem der Ansprüche 1 bis 6, **dadurch gekennzeichnet, dass** eine Anzeigeeinrichtung (71) mit einem ersten Anzeigeelement (72) und einem zweiten Anzeigeelement (74) vorgesehen ist.

8. Rotationslasergerät nach einem der Ansprüche 1 bis 7, **dadurch gekennzeichnet, dass** ein Laserempfänger (27) vorgesehen ist, wobei der Laserempfänger (27) über eine Kommunikationsverbindung (28) mit dem Rotationslasergerät (1) verbindbar ist und der Laserempfänger (27) ausgebildet ist, zumindest eine Strahleigenschaft des Laserstrahls (5) und/oder ein Zeitintervall (T₁, T₂) des Laserstrahls (5) zu bestimmen.

9. Verfahren zur Ausrichtung eines Rotationslasergerätes (1), bei dem ein Laserstrahl (5) mittels einer Neigungseinrichtung (17) um eine Neigungsachse (X) relativ zu einer horizontalen Ebene (X, Y), die senkrecht zum Schwerefeld der Erde angeordnet ist, geneigt wird, und
das Rotationslasergerät (1) um eine Rotationsachse (4) in eine Winkelposition (Γ), in der die Neigungsachse (X) parallel zu einer vorgegebenen Neigungsrichtung (75) ausgerichtet ist, gedreht wird,
**dadurch gekennzeichnet, dass** die Winkelposition (Γ), in der die Neigungsachse (X) parallel zu einer vorgegebenen Neigungsrichtung (75) ausgerichtet ist, in einer Speichereinrichtung (22; 31; 51) gespeichert wird.

10. Verfahren nach Anspruch 9, **dadurch gekennzeichnet, dass** der Laserstrahl (5) mit einer Rotationsgeschwindigkeit um die Rotationsachse (4) bewegt wird, ein Drehwinkel des Laserstrahls (5) um die Rotationsachse (4) von einer Messeinrichtung (21) erfasst wird und zumindest eine Strahleigenschaft des Laserstrahls (5) in Abhängigkeit vom Drehwinkel eingestellt wird.

11. Verfahren nach Anspruch 10, **dadurch gekennzeichnet, dass** die zumindest eine Strahleigenschaft des Laserstrahls (5) bei Erreichen der Winkelposition (Γ) von einem ersten Wert (F₁) zu einem zweiten Wert (F₂) und bei Erreichen der Nullposition (0°) von dem zweiten Wert (F₂) zu dem ersten Wert (F₁) verändert wird.

12. Verfahren nach Anspruch 10, **dadurch gekennzeichnet, dass** aus der mindestens einen gespeicherten Winkelposition (Γ) ein erster Drehwinkel (Γ - Δγ) und ein zweiter Drehwinkel (Γ + Δγ) berechnet werden und zumindest eine Strahleigenschaft des Laserstrahls (5) in Abhängigkeit vom Drehwinkel der Lasereinrichtung (3) gesteuert wird, wobei die zumindest eine Strahleigenschaft bei Erreichen des ersten Drehwinkels (Γ - Δγ) von einem ersten Wert (F₁) zu einem zweiten Wert (F₂), bei Erreichen des zweiten Drehwinkels (Γ+ Δγ) von dem zweiten Wert (F₂) zu einem dritten Wert (F₃) und bei Erreichen der Nullposition (0°) von dem dritten Wert (F₃) zu dem ersten Wert (F₁) verändert wird.

13. Verfahren nach Anspruch 9, **dadurch gekennzeichnet, dass** die Lasereinrichtung (3) zwischen einem ersten Wendepunkt (W₁) und einem zweiten Wendepunkt (W₂) um die Rotationsachse (4) hin- und herbewegt wird.

14. Verfahren nach einem der Ansprüche 9 bis 13, **dadurch gekennzeichnet, dass** der Laserstrahl (5) von einem Laserempfänger (27) erfasst und die zumindest eine Strahleigenschaft des Laserstrahls (5) und/oder ein Zeitintervall (T₁, T₂) des Laserstrahls (5) von dem Laserempfänger (27) bestimmt wird.

15. Verfahren nach Anspruch 14, **dadurch gekennzeichnet, dass** aus der zumindest einen Strahleigenschaft des Laserstrahls (5) und/oder dem Zeitintervall (T₁, T₂) eine Verstellanweisung für den Bediener bestimmt wird, wobei die Verstellanweisung auf einer Anzeigeeinrichtung (71) angezeigt wird.

16. Verfahren nach Anspruch 9, **dadurch gekennzeichnet, dass** die mindestens eine gespeicherte Winkelposition (Γ) an eine automatische Verstelleinrichtung (81) übermittelt wird und das Rotationslasergerät (1) zumindest teilweise von der Verstelleinrichtung (81) um die Rotationsachse (4) in die gespeicherte Winkelposition (Γ) gedreht wird.
